Europäisches Patentamt

European Patent Office

Office européen des brevets

(19)

(11) Veröffentlichungsnummer: **0 303 012 B1**

(12)

# EUROPÄISCHE PATENTSCHRIFT

(45) Veröffentlichungstag der Patentschrift:
31.10.90

(21) Anmeldenummer: 88108861.1

(22) Anmeldetag: 03.06.88

(51) Int. Cl.⁵: **B62D 37/02**

(54) **Formkörper, insbesondere Heckspoiler.**

(30) Priorität: 14.08.87 DE 3727095

(43) Veröffentlichungstag der Anmeldung:
15.02.89 Patentblatt 89/7

(45) Bekanntmachung des Hinweises auf die Patenterteilung:
31.10.90 Patentblatt 90/44

(84) Benannte Vertragsstaaten:
**DE FR GB IT**

(56) Entgegenhaltungen:
**EP-A- 0 176 495**
**DE-A- 2 555 006**
**DE-A- 3 422 241**
**DE-A- 3 511 808**
**US-A- 4 653 795**

(73) Patentinhaber: **PHOENIX AKTIENGESELLSCHAFT,**
**Hannoversche Strasse 88, D-2100 Hamburg 90(DE)**

(72) Erfinder: **Schütz, Bernd, Rosenstrasse 50,**
**D-2117 Tostedt(DE)**

ACTORUM AG

## Beschreibung

Die Erfindung betrifft einen Formkörper, insbesondere Heckspoiler, gemäß Oberbegriff des Anspruchs 1.

Derartige Formkörper sind bekannt (DE-U-75 39 034, DE-A-34 22 241). Der Kern solcher Formkörper besteht bis heute vorzugsweise aus dem System Polystyrol (expandiert) / Expoxidschaum (Kurzform: EPS/EP). Mit diesem System sind jedoch zahlreiche bisher ungelöste Probleme verbunden, wobei die wesentlichen nun aufgeführt werden.

1) Ein EPS/EP-Kern ist nicht über 80°C beständig. Eine Temperung (z. B. 1/2 Stunde bei 120°C) des Formkörpers ohne Deformation ist daher unmöglich.

2) Ein EPS/EP-Kern muß zwecks besserer Haftung der Polyurethan-Ummantelung chemisch und/oder mechanisch vorbehandelt werden. Der damit verbundene Arbeitsaufwand (z. B. durch Einsatz zusätzlicher Werkzeuge) ist groß.

3) Ein EPS/EP-Kern muß in zwei Schritten hergestellt werden, d. h. es werden zwei Werkzeuge benötigt.

Aufgabe der Erfindung ist es daher, den gattungsgemäßen Formkörper so weiter zu entwickeln, daß die oben geschilderten Probleme nicht mehr auftreten.

Gelöst wird diese Aufgabe durch das Kennzeichen des Anspruchs 1 oder 2.

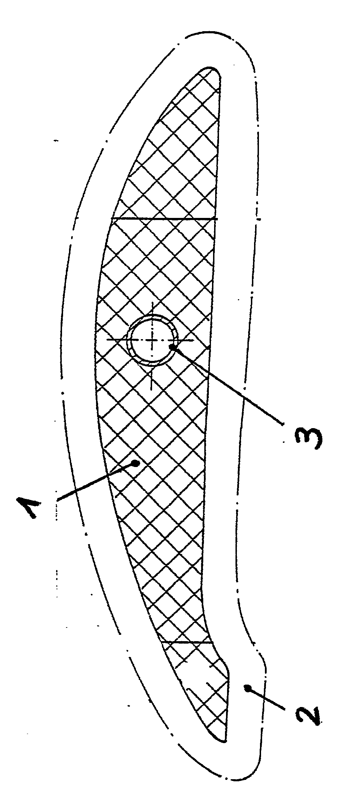

Die Erfindung wird nachfolgend anhand eines Ausführungsbeispiels unter Bezugnahme auf die Zeichnung näher erläutert.

Der Heckspoiler (hier im Querschnitt gesehen) besteht aus dem geschäumten Styrol-Maleinsäure-Anhydrid-Copolymer-Kern (1) (Kurzform:SMA), der mit Polyurethan-Integralschaum (2) ummantelt ist, wobei die Stärke der Ummantelung 6 bis 8 mm beträgt. Im Zentrum befindet sich ein Stahlrohr (3) zwecks Erhöhung der Biegesteifigkeit. Bezüglich seiner zweckmäßigen Dimensionierung wird auf den Anspruch 5 verwiesen. Zwischen dem SMA-Kern und der PU-Ummantelung befindet sich keine Haftzwischenschicht. Das Raumgewicht eines Leichtbau-Heckspoilers beträgt ca. 400 kg/m³.

## Patentansprüche

1) Formkörper, insbesondere Heckspoiler, bestehend aus einem geschäumten Copolymer-Kern und einer Ummantelung aus Polyurethan-Integralschaum, dadurch gekennzeichnet, daß der Kern aus geschäumtem Styrol-Maleinsäure-Anhydrid-Copolymer besteht und mit einem oder mehreren Rohr(en) verstärkt ist, wobei zwischen dem Kern und Mantel keine Haftzwischenschicht vorhanden ist.

2) Formkörper, insbesondere Heckspoiler, bestehend aus einem geschäumten Copolymer-Kern und einer Ummantelung aus Polyurethan-Integralschaum, dadurch gekennzeichnet, daß der Kern aus geschäumtem Styrol-Maleinsäure-Anhydrid-Copolymer besteht und mit einem Gewebe aus Polyester und/oder Polyamid und/oder Aramid verstärkt ist, wobei zwischen dem Kern und Mantel keine Haftzwischenschicht vorhanden ist.

3) Formkörper nach Anspruch 1, dadurch gekennzeichnet, daß sich im Zentrum der breitesten Stelle des Kerns ein einziges Rohr befindet.

4) Formkörper nach Anspruch 1 oder 3, dadurch gekennzeichnet, daß jedes Rohr aus Stahl oder Kunststoff (z. B. Aramid) besteht.

5) Form nach Anspruch 1, 3 oder 4, dadurch gekennzeichnet, daß der Innendurchmesser eines Rohres 6 bis 18 mm beträgt, u. z. bei einer Wandstärke von 1 bis 2 mm.

## Revendications

1. Corps profilé, en particulier déflecteur aérodynamique arrière, se composant d'un noyau en copolymère mousse et d'une enveloppe en mousse à peau intégrée de polyuréthane, caractérisé en ce que le noyau (1) est fait d'un copolymère styrène/anhydride maléique mousse et est renforcé par un ou plusieurs tubes (3), et en ce qu'il n'est pas interposé de couche intermédiaire d'adhérence entre le noyau (1) et l'enveloppe (2).

2. Corps profilé, en particulier déflecteur aérodynamique arrière, se composant d'un noyau en copolymère mousse et d'une enveloppe en mousse à peau intégrée de polyuréthane, caractérisé en ce que le noyau est fait d'un copolymère styrène/anhydride maléique mousse et est renforcé par un tissu en polyester et/ou en polyamide et/ou en aramide, et en ce qu'il n'est pas interposé de couche intermédiaire d'adhérence entre le noyau et l'enveloppe.

3. Corps profilé selon la revendication 1, caractérisé en ce qu'un unique tube (3) se trouve au centre de la région la plus large du noyau (1).

4. Corps profilé selon la revendication 1 ou 3, caractérisé en ce que chaque tube est en acier ou en matière plastique (par exemple en aramide).

5. Corps profilé selon la revendication 1, 3 ou 4, caractérisé en ce que le diamètre intérieur du ou des tubes est compris entre 6 et 18 mm, et cela avec une épaisseur de paroi de 1 à 2 mm.

## Claims

1. A moulded body, in particular a rear spoiler, comprising a foamed copolymer core and casing made of polyurethane-integral foam, characterised in that the core consists of foamed styrol-maleic acid-anhydride-copolymer and is reinforced with one or more tube(s), no adhesive intermediate layer being present between the core and the casing.

2. A moulded body, in particular a rear spoiler, comprising a foamed copolymer core and a casing made of polyurethane-integral foam, characterised in that the core consists of foamed styrol-maleic acid- anhydride-copolymer and is reinforced with a web of polyester and/or polyamide and/or aramide, no adhesive intermediate layer being present between the core and the casing.

3. A moulded body as claimed in Claim 1, characterised in that one single tube is arranged at the centre of the widest point of the core.

4. A moulded body as claimed in Claims 1 or 3, characterised in that each tube is made of steel or synthetic resin (e.g. aramide).

5. A mould (sic) as claimed in Claim 1, 3 or 4, characterised in that the inner diameter of a tube amounts to 6 to 18 mm, with a wall thickness of 1 to 2 mm.